# EUROPEAN PATENT SPECIFICATION

(11) **EP 2 210 299 B1**
(45) Date of publication and mention of the grant of the patent: **09.11.2016**
(21) Application number: 07842733.3
(22) Date of filing: 19.09.2007
(51) Int. Cl.: H01M 4/88, H01M 8/086, H01M 8/0234, H01M 8/0243, H01M 8/1018

(54) **HIGH THERMAL CONDUCTIVITY ELECTRODE SUBSTRATE**
ELEKTRODENSUBSTRAT MIT HOHER WÄRMELEITFÄHIGKEIT
SUBSTRAT D'ÉLECTRODE À CONDUCTIVITÉ THERMIQUE ÉLEVÉE

(43) Date of publication of application: 28.07.2010
(73) Proprietor: Audi AG, 85045 Ingolstadt (DE)
(72) Inventor: BREAULT, Richard D., North Kingstown RI 02852 (US)
(86) International application number: PCT/US2007/078821
(87) International publication number: WO 2009/038577

(56) References cited:
- WO-A2-2005/122298
- JP-A- 11 185 770
- JP-A- 62 010 866
- US-A- 4 851 304
- US-A1- 2002 175 073
- US-A1- 2005 164 059

## Description

### BACKGROUND

This disclosure relates to a carbon-carbon composite suitable for use as a substrate in fuel cells, for example.

Some types of fuel cells, such as proton exchange membrane and phosphoric acid fuel cells (PEMFC and PAFC), use porous carbon-carbon composites as electrode substrates, which are also referred to as gas diffusion layers. One example fuel cell substrate and manufacturing process is shown in US patent 4,851,304.

One typical method of making a substrate includes: (1) forming a non-woven felt from a chopped carbon fiber and a temporary binder by a wet-lay paper making process, (2) impregnating or pre-pregging the felt with a phenolic resin dissolved in a solvent followed by solvent removal without curing the resin, (3) pressing one or more layers of felt to a controlled thickness and porosity at a temperature sufficient to cure the resin, (4) heat treating the felt in an inert atmosphere to between 750-1000°C to convert the phenolic resin to carbon, and (5) heat treating the felt in an inert atmosphere to between 2000-3000°C to improve thermal and electrical conductivities and to improve corrosion resistance.

Thermal conductivity is important because it impacts acid life in a PAFC and hot cell temperature, which effects fuel cell durability, for example. Achieving desired through-plane thermal conductivity can be especially difficult. The through-plane thermal conductivity of some substrates is less than desired, for example, approximately 2 W·m⁻¹·K⁻¹. One cause of low through-plane thermal conductivity is that the carbon fibers are generally aligned in the planar direction of the substrate as opposed to being aligned more in the through-plane direction. The thermal conductivity of carbon fibers arranged in the through-plane direction is significantly lower when they are arranged in the planar direction as compared to the through-plane direction. Typically, PAFC substrates are about 0.40 mm thick and are made from polyacrylonitride (PAN) based carbon fibers that are 6-12 mm long, which provides a ratio of the fiber length to the thickness of the substrate of 15-30:1. Thus, the PAN fibers cannot be arranged in the through-plane direction. A substrate with higher through-plane thermal conductivity is desired, in particular, a conductivity of 4 W·m⁻¹·K⁻¹ or greater.

US 2005/0164059 A1 discloses fuel cells operating on a hydrogen-rich organic fuel that is initially in a liquid form, but turns into a vapor form when it comes in contact with a catalyst phase in the anode. The disclosure aims at providing a simpler configuration for such fuel cells. For preparing an anode, graphite flakes were subjected to a ball-milling treatment to obtain fine particles of several microns in size. These fine particles were mixed with a phenolic resin to obtain a slurry mixture. Chopped carbon fibers were then mixed with the slurry mixture to prepare a composite, which was then molded at a temperature of 250° C for one hour with a hot press and then partially carbonized first at 350° C and then at 600° C for approximately two hours. The resulting thin, highly porous carbon structure was coated on one side with a Pt-Ru catalyst to give an anode of the fuel cell.

JP 11-185770 A discloses carbon substrates for fuel cells, the substrates having an improved heat conductivity. The substrate comprises at least two types of chopped fibers of 3 to 25 mm in length and milled fibers of 1 mm or less in length. By controlling the mixing ratio of the long fibers and the short fibers, the heat conductivity of each substrate can be controlled and can be adapted to the distance of the substrate from a cooling plate within the fuel cell stack.

### SUMMARY

Subject-matter of the present invention is an electrode substrate and a method of manufacturing an electrode substrate as defined in the independent claims. Embodiments of the invention are defined in the dependent claims.

An electrode substrate is disclosed that includes a plane and a through-plane direction. First and second carbon fibers are respectively arranged in the plane and through-plane direction. The substrate includes a thickness in the through-plane direction and the second fibers have a length less than the thickness. The first carbon fiber has a length greater than the thickness. The first fibers, which are long, provide strength and porosity to the substrate. The second fibers, which are short, improve through-plane thermal conductivity as well as electrical conductivity. The first fibers are PAN-based carbon fibers and the second fibers are meso-phase pitch fibers, and the second fibers have a ratio of fiber length to substrate thikness of 0.25-0.50:1.

In one example method of manufacturing the example substrate, PAN-based carbon fibers are blended with meso-phase pitch-based carbon fibers. A resin is applied to a non-woven felt constructed from the PAN-based and meso-phase pitch-based carbon fibers. The felt and resin are heated to a desired temperature to achieve a desired thermal conductivity.

Accordingly, the disclosed embodiment provides a substrate with an increased through-plane thermal conductivity over prior art carbon based electrode substrates.

These and other features of the present invention can be best understood from the following specification and drawings, the following of which is a brief description.

### BRIEF DESCRIPTION OF THE DRAWINGS

Figure 1 is a highly schematic view of one example fuel cell.
Figure 2 is a highly schematic view of an enlarged partial cross-sectional view of an electrode substrate.
Figure 3 illustrates an estimate of through-plane thermal conductivity of the example electrode substrate.

### DETAILED DESCRIPTION OF THE PREFERRED EMBODIMENT

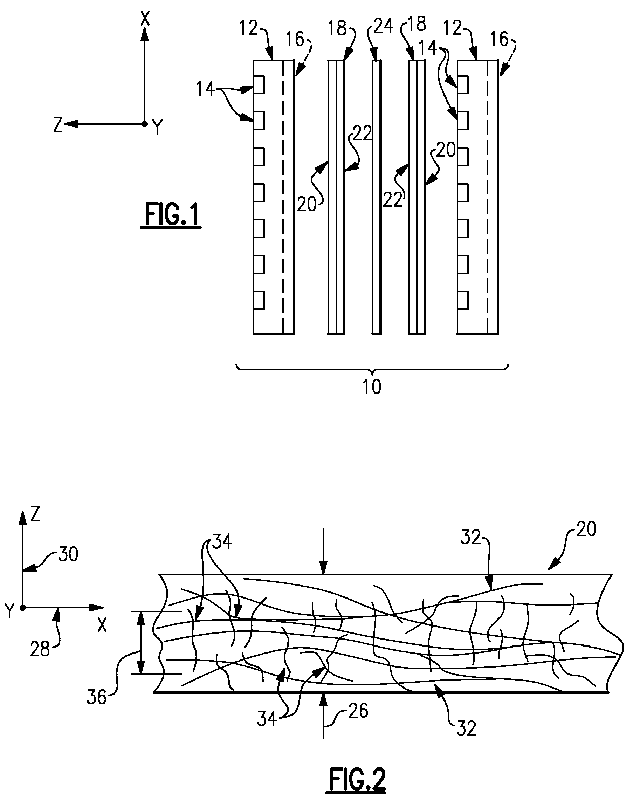

An example fuel cell 10 is schematically shown in Figure 1. Multiple cells 10 are arranged adjacent to one another in the Z-direction to form a stack (Z direction not shown in Figure 1). The fuel cell 10 includes gas separators 12 having fuel passages 14 arranged on one side and oxidant passages 16 arranged on the opposing side. For one type of example gas separator 12, the fuel and oxidant passages 14, 16 are arranged perpendicularly relative to one another for respectively carrying a hydrogen rich fuel and air. Electrodes 18 are arranged on either side of an electrolyte layer 24 and adjacent to the gas separators 12. The components of the fuel cell 10 operate in a known manner. The electrodes 18 include a substrate 20 and a catalyst 22, in one example embodiment.

Typically, the substrate 20 is constructed from carbon fibers. The type and size of carbon fibers are selected to provide various desired parameters of the substrate 20. The example substrate 20 is a porous carbon-carbon composite, which may be used as an electrode substrate in a fuel cell to provide through-plane (Z-direction) thermal conductivity 2-3 times greater than presently available materials. A blend of long and short carbon fibers is used, which is provided by PAN and meso-phase pitch-based fibers, in one example. Meso-phase pitch based fibers are much more graphitizable than PAN based carbon fibers. Thermal conductivity of meso-phase pitch based fibers in the longitudinal direction of the fiber increases as the heat treat temperature of the fiber is increased. The conductivity of graphitized meso-phase pitch is as high as 1,000 W·m⁻¹·K⁻¹ in the longitudinal direction.

An enlarged cross-sectional view of a portion of the substrate 20 is shown in Figure 2. The substrate 20 is constructed from at least a first and second carbon fiber that are different than one another. The substrate 20 extends in a plane 28 arranged in X- and Y-directions. The substrate 20 has a thickness 26 along a Z-direction. The thickness 26 is oriented the through-plane direction. First fibers 32 correspond to PAN-based carbon fibers, in one example. Second fibers 34 correspond to meso-phase pitch-based carbon fibers, in one example. The length of the first fibers 32 is significantly longer than the thickness 26. The length 36 of the second fibers 34 are shorter than the thickness 26 so they can extend generally perpendicular to the plane 28 and in the through-plane direction 30.

The majority of the fibers are first fibers 32 (long PAN based fibers) with a ratio of fiber length to substrate thickness of 15-30:1. These long fibers are orientated in the plane 28 and result in a high porosity and high flex strength.

The minority of the fibers are second fibers 34 (short meso-phase pitch-based fibers) with a ratio of fiber length to substrate thickness of 0.25-0.50:1. The short fibers are oriented in the through-plane direction for improved through-plane thermal conductivity.

PAN based carbon fibers are disclosed in the example for the long fibers relative to either an isotropic pitch based carbon fiber or a meso-phase pitch based carbon fiber. However, isotropic or meso-phase pitch based fibers may be used in place of the PAN based fibers. The long fibers are generally referred to as "chopped" fibers, which have a length greater than 1mm and typically 3-12 mm. The short fibers may be carbonized pitch based carbon fibers heat treated at a temperature between 1000-3000°C. The short fibers are generally referred to as "milled" fibers with a length of less than 0.50 mm and typically 0.10-0.20 mm. In one example, the meso-phase pitch based carbon fibers are graphitized at a temperature of 2000-3000°C. Alternatively, the meso-phase pitch based carbon fiber may be a carbonized fiber that is subsequentially converted to graphite as part of the substrate heat treat process.

The density of the preferred substrates is between 0.38 to 0.76 g/ml with a typical value being about 0.58 g/ml. These densities correspond to a porosity range of 60 to 80 percent with the typical value being about 70 percent.

In one example, a mathematical model is used to estimate the through-plane thermal conductivity of a porous substrate as a function of composition. The model is comprised of two-parallel paths, one in the PAN-based fiber and the other in the pitch-based fiber. The over-all bulk density of the substrate was held constant at 0.58 g/ml, in one example, which is equal to a porosity of 70%. Variables considered were the conductivity of the pitch-based carbon fiber, the ratio of pitch based carbon fiber to PAN-based carbon fiber and the effectiveness of the orientation of the pitch based fiber. The thermal conductivity of the porous composite, k, is given by:
k = kₒθb + ^{εk}pitchθpitch^{b}
k = conductivity porous composite
ko = conductivity solid PAN based composite
kpitch = conductivity pitch fiber
Θ = void fraction PAN solids
Θ_{pitch} = void fraction pitch solids
b = 1.7 for both phases
ε = effectiveness of orientation

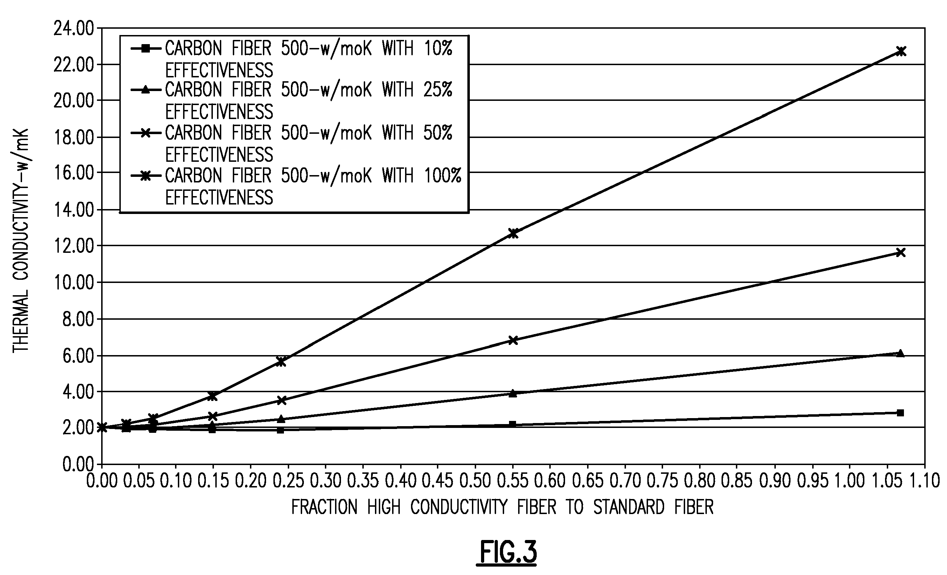

The thermal conductivity, k, can be expressed as a function of composition and effectiveness of the fiber orientation. Figure 3 is an estimate of the through-plane thermal conductivity of a substrate, with a density of 0.58 g/ml, as a function of the fraction of high conductivity fiber to standard fiber, and as a function of the effectiveness of the orientation of the high conductivity fiber. A pitch to PAN ratio of 0.4 (29% pitch) is predicted to have a thermal conductivity of approximately 5 W·m⁻¹·K⁻¹ if the effectiveness of the fiber orientation is 50%. This represents a 2.5 fold increase over the baseline material.

Suitable meso-phase pitch based carbon fibers are available from Cytec, for example. Cytec ThermalGraph DKD is a high conductivity fiber with an axial conduction of 400-700 W·m⁻¹·K⁻¹. The standard fiber is available as a milled fiber with an average length of 0.20 mm. A 0.10 mm fiber can also be obtained. These fibers result in a ratio of fiber length to substrate thickness of 0.25-0.50:1 for a substrate thickness of 0.40 mm.

### First Example Substrate Manufacturing Method

An illustrative method of making a substrate consists of: (1) creating an aqueous suspension, consisting of chopped PAN based carbon fibers and milled meso-phase pitch based carbon fibers, a temporary binder such as polyvinyl alcohol, (2) forming a non-woven felt from the suspension by a wet-lay paper making process, (3) dewatering the felt by a combination of removing the water by gravity and vacuum on the wire screen and drying the felt by heating the felt, (4) impregnating or pre-pregging the felt with a phenolic resin dissolved in a solvent followed by solvent removal without curing the resin, (5) pressing one or more layers of felt to a controlled thickness and porosity at a temperature (175 +/-25°C) sufficient to first melt and then cure and cross-link the resin for a time of 1-5 minutes, (6) heat treating the felt in an inert atmosphere to between 750-1000°C to convert the phenolic resin to carbon, and (7) heat treating the felt in an inert atmosphere to between 2000-3000°C to partially graphitize the materials and preferably heat treated between 2500-3000°C to maximize the thermal conductivity.

### Second Example Substrate Manufacturing Method

The example substrate can also be used in a dry-lay non-woven forming process by: (1) creating a dry blend consisting of chopped PAN based carbon fibers and milled pitch based carbon fibers, chopped novolac fibers or a powdered phenolic resin, a temporary binder such as polyvinyl alcohol powder and a curing agent such as powdered hexa, (2) forming a non-woven felt from a fluidized stream of the dry powder blend by a dry-lay non-woven forming process, (3) heating the felt at a sufficiently low felt temperature (100 +/-25°C) that the resin does not cross-link to provide sufficient strength for handling, (4) pressing one or more layers of felt to a controlled thickness and porosity at a temperature (175 +/-25°C) sufficient to first melt and then cure and cross-link the resin for a time of 1-5 minutes, (5) heat treating the felt in an inert atmosphere to between 750-1000°C to convert the phenolic resin to carbon and (6) heat treating the felt in an inert atmosphere to between 2000-3000°C and preferably heat treated between 2500-3000°C to maximize the thermal conductivity.

The resulting carbon composite provides a thermal conductivity 2-3 times greater than presently available materials for use in electrochemical cells that consists of a precursor felt that contains a blend of long and short fibers (a blend of PAN and meso-phase pitch based fibers). The majority of the fibers are long PAN based fibers with a ratio of fiber length to substrate thickness of 15-30:1. The minority of the fibers are short meso-phase pitch based fibers with a ratio of fiber length to substrate thickness of 0.25-0.50:1. The ratio of meso-phase pitch based carbon fibers to PAN based carbon fibers is between 0.3-1.0.

The thermal conductivity of the substrate is doubled in the example embodiment, reducing the hot cell temperature by about 7°C at 8 cells per cooler, which results in improved performance durability and reduced acid loss. Alternatively, doubling the thermal conductivity permits the cells per cooler to be increased from 8 to about 11-12 while maintaining the same hot cell temperature thus resulting in reduced cost.

This discussion has focused on improving thermal conductivity. One skilled in the art will recognize that carbon fiber orientations and carbon fiber compositions that improve through-plane thermal conductivity will also improve through-plane electrical conductivity. This is beneficial because it will lower the resistance of the fuel cell substrate resulting in higher cell voltages.

Although an example embodiment has been disclosed, a worker of ordinary skill in this art would recognize that certain modifications would come within the scope of the claims. For that reason, the following claims should be studied to determine their true scope and content.

## Claims

1. An electrode substrate comprising a plane and a through-plane direction, first and second carbon fibers respectively arranged in the plane and through-plane directions, the substrate having a thickness in the through-plane direction and the second fiber having a length less than the thickness, and the first carbon fiber having a length greater than the thickness,
wherein the first fibers are PAN-based carbon fibers and the second fibers are meso-phase pitch fibers, and
wherein the second fibers include a ratio of fiber length to substrate thickness of 0.25-0.50:1.

2. The electrode substrate according to claim 1, wherein the length of the second fibers is less than 0.5mm.

3. The electrode substrate according to claim 2, wherein the length of the second fibers is substantially less than 0.4mm.

4. The electrode substrate according to claim 3, wherein the length of the second fibers is an average length of 0.1-0.2mm.

5. The electrode substrate according to any one of claims 1 to 4, wherein the first fibers include a ratio of fiber length to substrate thickness of 15-30:1.

6. The electrode substrate according to claim 5, wherein the first fibers include a length of greater than 1mm.

7. The electrode substrate according to claim 6, wherein the length of the first fibers is between 3-12mm.

8. The electrode substrate according to claim 7, wherein the length of the first fibers is between 6-12mm.

9. The electrode substrate according to any one of claims 1 to 8, wherein the electrode substrate includes an over-all bulk density of 0.38 to 0.76 g/ml.

10. The electrode substrate according to claim 9, wherein the electrode substrate includes a porosity of 60 to 80%.

11. The electrode substrate according to any one of claims 1 to 10, wherein the electrode substrate comprises a thermal conductivity in the through-plane direction of 4 to 8 W· m⁻¹·K⁻¹.

12. The electrode substrate according to any one of claims 1 to 11, wherein the ratio of second fibers to first fibers is between 0.3-1.0.

13. The electrode substrate according to any one of claims 1 to 12, wherein the thermal conductivity in the through-plane direction is greater than or equal to 4 W·m⁻¹·K⁻¹.

14. A method of manufacturing an electrode substrate comprising the steps of:
blending chopped carbon fibers with milled carbon fibers;
applying a resin to a non-woven felt constructed from the chopped and milled carbon fibers;
pressing and curing one or more plys of felt; and
heating the felt and resin to a desired temperature in an inert atmosphere to achieve a desired thermal conductivity,
wherein the felt includes a thickness and the milled fibers include a ratio of fiber length to felt thickness of between 0.25-0.50:1.

15. The method according to claim 14, wherein the desired thermal conductivity corresponds to a through-plane conductivity of greater than or equal to 4 W·m⁻¹·K⁻¹.

## Patentansprüche

1. Ein Elektroden-Substrat, das eine X/Y-Richtung und eine Z-Richtung, erste und zweite Kohlenstofffasern umfasst, die jeweils in der X/Y-Richtung und in der Z-Richtung angeordnet sind, wo das Substrat in die Z-Richtung eine Dicke aufweist und die zweite Faser eine Länge kleiner als die Dicke aufweist, und die erste Kohlenstofffaser eine Länge größer als die Dicke aufweist,
- wobei die ersten Fasern PAN-basierte Kohlenstofffasern sind und die zweiten Fasern Mesophasen-basierende Harz-Fasern sind, und
- wobei das Verhältnis zwischen Faserlänge und Substratdicke der zweiten Fasern von 0,25 - 0,50:1 beträgt.

2. Das Elektroden-Substrat gemäß Anspruch 1, wo die Faserlänge der zweiten Fasern kürzer als 0,5 mm ist.

3. Das Elektroden-Substrat gemäß Anspruch 2, wo die Faserlänge der zweiten Fasern kürzer als 0,4 mm ist.

4. Das Elektroden-Substrat gemäß Anspruch 3, wo die Faserlänge der zweiten Fasern sich durchschnittlich auf 0,1 bis 0,2 mm beläuft.

5. Das Elektroden-Substrat gemäß einem der Ansprüche 1 bis 4, wo die ersten Fasern ein Verhältnis zwischen Faserlänge und Substratdicke von 15-30:1 aufweisen.

6. Das Elektroden-Substrat gemäß Anspruch 5, wo die Faserlänge der ersten Fasern länger als 1 mm ist.

7. Das Elektroden-Substrat gemäß Anspruch 6, wo die Faserlänge der ersten Fasern zwischen 3 und 12 mm liegt.

8. Das Elektroden-Substrat gemäß Anspruch 7, wo die Faserlänge der ersten Fasern zwischen 6 und 12 mm liegt.

9. Das Elektroden-Substrat gemäß einem der Ansprüche 1 bis 8, wo das Elektroden-Substrat eine Gesamtschüttdichte von 0,38 bis 0,76 g/ml aufweist.

10. Das Elektroden-Substrat gemäß Anspruch 9, wo das Elektroden-Substrat eine Porosität von 60 bis 80 % aufweist.

11. Das Elektroden-Substrat gemäß einem der Ansprüche 1 bis 10, wo das Elektroden-Substrat eine thermische Leitfähigkeit in die Z-Richtung von: 4 bis 8 W m⁻¹ K⁻¹ aufweist.

12. Das Elektroden-Substrat gemäß einem der Ansprüche 1 bis 11, wo das Verhältnis zwischen zweiten Fasern und ersten Fasern zwischen 0,3-1,0 liegt.

13. Das Elektroden-Substrat gemäß einem der Ansprüche 1 bis 12, wo die thermische Leitfähigkeit in die Z-Richtung größer oder gleich 4 W m⁻¹ K⁻¹ ist.

14. Ein Verfahren zur Herstellung eines Elektroden-Substrats, die folgende Schritte umfasst:
- Vermischen von zerschnittenen Kohlenstofffasern mit gemahlenen Kohlenstofffasern;
- Auftragen eines Harzes auf einen nicht-gewebten Filz, der aus den zerschnittenen und gemahlenen Kohlenstofffasern gebildet wurde;
- Pressen und Aushärten von einer oder mehreren Lagen Filz; und
- Erwärmen des Filzes und des Harzes auf eine gewünschte Temperatur unter Schutzgasatmosphäre, um eine gewünschte thermische Leitfähigkeit zu erzielen,
wobei der Filz eine Dicke besitzt und die gemahlenen Fasern ein Verhältnis von Faserlänge zu Filzdicke zwischen 0,25 bis 0,50:1 aufweisen.

15. Das Verfahren gemäß Anspruch 14, wo die gewünschte thermische Leitfähigkeit einer Leitfähigkeit in die Z-Richtung größer oder gleich 4 W m⁻¹ K⁻¹ entspricht.

## Revendications

1. Substrat d'électrode comprenant des directions dans le plan et à travers le plan, des premières et secondes fibres de carbone agencées respectivement dans les directions dans le plan et à travers le plan, le substrat ayant une épaisseur dans la direction à travers le plan et la seconde fibre ayant une longueur inférieure à l'épaisseur, et la première fibre de carbone ayant une longueur supérieure à l'épaisseur, dans lequel les premières fibres sont des fibres de carbone à base de PAN et les secondes fibres sont des fibres de poix à mésophase, et
dans lequel les secondes fibres ont un rapport entre la longueur de fibre et l'épaisseur de substrat de 0,25 à 0,50 : 1.

2. Substrat d'électrode selon la revendication 1, dans lequel la longueur des secondes fibres est inférieure à 0,5 mm.

3. Substrat d'électrode selon la revendication 2, dans lequel la longueur des secondes fibres est sensiblement inférieure à 0,4 mm.

4. Substrat d'électrode selon la revendication 3, dans lequel la longueur des secondes fibres est une longueur moyenne de 0,1 à 0,2 mm.

5. Substrat d'électrode selon l'une quelconque des revendications 1 à 4, dans lequel les premières fibres ont un rapport entre la longueur de fibre et l'épaisseur de substrat de 15 à 30 : 1.

6. Substrat d'électrode selon la revendication 5, dans lequel les premières fibres ont une longueur supérieure à 1 mm.

7. Substrat d'électrode selon la revendication 6, dans lequel la longueur des premières fibres est entre 3 et 12 mm.

8. Substrat d'électrode selon la revendication 7, dans lequel la longueur des premières.fibres est entre 6 et 12 mm.

9. Substrat d'électrode selon l'une quelconque des revendications 1 à 8, dans lequel le substrat d'électrode a une masse volumique apparente globale de 0,38 à 0,76 g/mL.

10. Substrat d'électrode selon la revendication 9, dans lequel le substrat d'électrode a une porosité de 60 à 80 %.

11. Substrat d'électrode selon l'une quelconque des revendications 1 à 10, dans lequel le substrat d'électrode comprend une conductivité thermique dans la direction à travers le plan de 4 à 8 W·m⁻¹·K⁻¹.

12. Substrat d'électrode selon l'une quelconque des revendications 1 à 11, dans lequel le rapport entre les secondes fibres et les premières fibres est entre 0,3 et 1,0.

13. Substrat d'électrode selon l'une quelconque des revendications 1 à 12, dans lequel la conductivité thermique dans la direction à travers le plan est supérieure ou égale à 4 W·m⁻¹·K⁻¹.

14. Procédé de fabrication d'un substrat d'électrode comprenant les étapes de :
mélange de fibres de carbone hachées avec des fibres de carbone broyées ;
application d'une résine à un feutre non tissé construit à partir des fibres de carbone hachées et broyées ;
pressage et durcissement d'un ou plusieurs plis de feutre ; et
chauffage du feutre et de la résine à une température souhaitée dans une atmosphère inerte pour parvenir à une conductivité thermique souhaitée,
dans lequel le feutre a une épaisseur et les fibres broyées ont un rapport entre la longueur des fibres et l'épaisseur de feutre entre 0,25 et 0,50 : 1.

15. Procédé selon la revendication 14, dans lequel la conductivité thermique souhaitée correspond à une conductivité à travers le plan supérieure ou égale à 4 W·m⁻¹·K⁻¹.
